# EUROPEAN PATENT APPLICATION

(11) **EP 2 528 201 A1**
(43) Date of publication of application: **28.11.2012**
(21) Application number: 12168679.4
(22) Date of filing: 21.05.2012
(51) Int. Cl.: H02K 3/51

(54) **Method for applying a retaining system above a rotor core of an electric machine and rotor assembly**

(30) Priority: 24.05.2011 EP 11167206
(71) Applicant: Alstom Technology Ltd, 5400 Baden (CH)
(72) Inventor: Rotzinger, Ralf, 79730 Murg-Niederhof (DE); Paatz, Christian, 5212 Hausen (CH); Wehrle, Anton, 5727 Oberkulm (CH)

(57) **Abstract**

The method for applying a retaining system (6) above a rotor core (2) of an electric machine comprises providing a rotor including a rotor core (2), a rotor shaft (3) and a coupling (4), cutting an inner ring (10) from the rotor, connecting a retaining ring (7) above the rotor core (2) with a portion thereof extending above the rotor shaft (3), connecting the inner ring (10) within a free end of the retaining ring (7), leaving a portion (11) of the inner ring (10) projecting from the retaining ring (7), providing an outer ring (12), connecting the outer ring (12) above the projecting portion (11) of the inner ring (10).

## Description

### TECHNICAL FIELD

The present invention relates to a method for applying a retaining system above a rotor core of an electric machine and a rotor assembly. In the following particular reference to synchronous electric generators such as turbo generators is made, it is anyhow clear that the invention can also be implemented in different electric machines such as different kind of generators (for example asynchronous generators) and electric motors.

### BACKGROUND

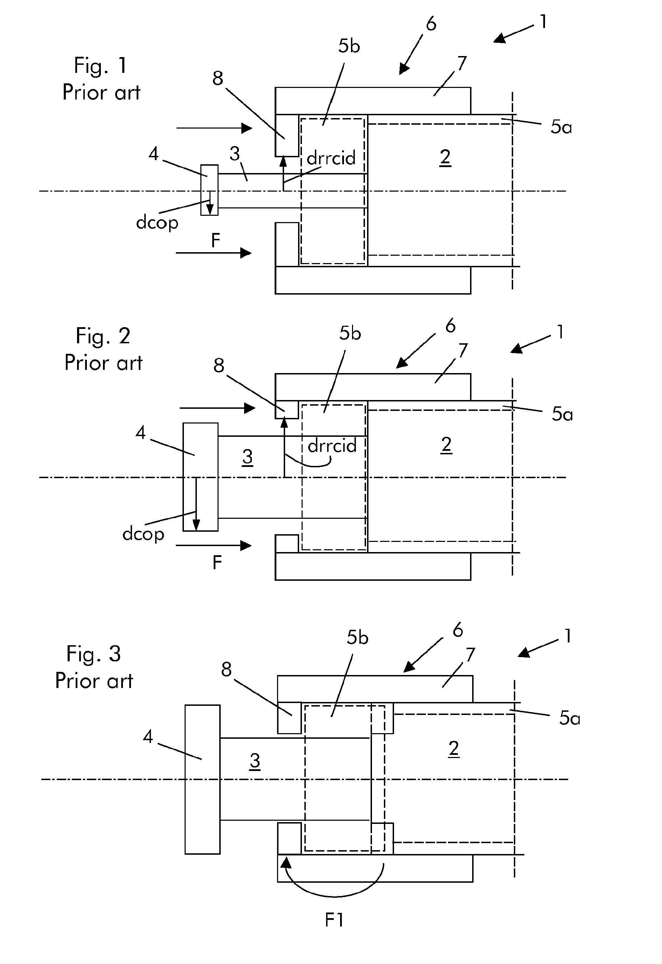

With reference to figures 1-3, electric machines such as electric generators are known to comprise a stator with a rotor assembly 1.

The rotor assembly 1 includes a rotor having a rotor core 2 and at its ends a rotor shaft 3 (only one end is shown).

At the end of the rotor shaft 3 a coupling 4 is provided; the coupling 4 is needed for connection of a motor such as a gas or steam turbine engine (not shown).

The rotor assembly 1 also includes windings having a part 5a housed in slots of the rotor core 2, and a part 5b (end windings) projecting outside of the slots.

Since during operation the end windings 5b are subjected to large centrifugal forces, retaining systems 6 are provided to help holding them.

The retaining systems 6 traditionally comprise a retaining ring 7 that is applied above the end of the rotor core 2 with a portion projecting above the rotor shaft 3, and an annular retaining ring cover 8 connected at the end of the retaining ring 7 to close and protect the zone of the retaining ring 7 housing the end windings 5b.

Traditional old generators (figure 1) have a shaft diameter and a coupling diameter that are small when compared to the rotor core diameter.

For this reason a retaining ring cover 8 having an inner diameter drrcid larger than the outer diameter dcod of the coupling 4 is provided and, in order to connect the retaining system 6 above the rotor core 2, the retaining ring 7 is shrunk above the rotor core 2, and the retaining ring cover 8 is inserted (arrows F) above the coupling 4 and rotor shaft 3 and is connected within the retaining ring 7.

Due to an increase of the generator output power (and thus of the power transferred from the motor to the rotor core 2 via the rotor shaft 3, newer generators (figure 2) have a larger shaft 3 but, also in this case, the coupling 4 has a slightly larger diameter than the rotor shaft 3 such that a retaining ring cover 8 having an inner diameter drrcid larger than the outer diameter dcod of the coupling 4 can be provided. In order to connect the retaining system 6 above the rotor core 2 the same steps indicated for the embodiment of figure 1 are followed and thus the retaining ring 7 is shrunk above the rotor core 2, and the retaining ring cover 8 is inserted (arrows F) above the coupling 4 and rotor shaft 3 and is connected within the retaining ring 7.

Due to a further increase of the generator output power (and thus of the power transferred from the motor to the rotor core 2 via the rotor shaft 3 and coupling 4) the dimension of the coupling 4 has been increased, such that in some cases the coupling 4 can have almost the same diameter as the rotor core 2.

In this case (figure 3), in order to connect the retaining system 6 above the rotor core 2, the retaining ring cover 8 is first cut from the end of the rotor core 2 (as indicated by the arrow F1), then the retaining ring 7 is inserted above the rotor core 2. Thus the retaining ring cover 8 cut from the rotor core 2 is connected within the retaining ring 7.

Since the end windings 5b are withheld by the retaining ring 7 and thus they urge the retaining ring 7 (centrifugal forces), and since the end windings 5b are not uniformly distributed over the circumference of the rotor core 2 and end windings 5b but are concentrated astride the poles, the forces acting on the retaining ring 7 are concentrated at the poles and cause the retaining ring 7 to deform accordingly during operation. For example, in a two-pole machine, during operation the retaining ring 7 assumes an oval configuration.

It is clear that such a deformation changes the retaining ring and end winding conditions with respect to the design conditions and must thus be counteracted.

### SUMMARY

The technical aim of the present invention therefore includes providing a method and an arrangement by which during operation the deformation of the retaining ring is reduced when compared to deformation of retaining rings of corresponding traditional rotor assemblies.

The technical aim, together with these and further aspects, are attained according to the invention by providing a method and a rotor assembly in accordance with the accompanying claims.

### BRIEF DESCRIPTION OF THE DRAWINGS

Further characteristics and advantages of the invention will be more apparent from the description of a preferred but non-exclusive embodiment of the method and arrangement illustrated by way of non-limiting example in the accompanying drawings, in which:
Figures 1-3 are schematic views of traditional rotor assemblies (only a part thereof is shown);
Figure 4 is a view of a rotor assembly in an embodiment of the invention (only one side of the rotor assembly is shown);
Figure 5 shows an enlarged portion of figure 4;
Figures 6 and 7 show different embodiments of the rotor assembly,
Figures 8 through 17 show different embodiments of an outer ring.

### DETAILED DESCRIPTION OF EMBODIMENTS OF THE INVENTION

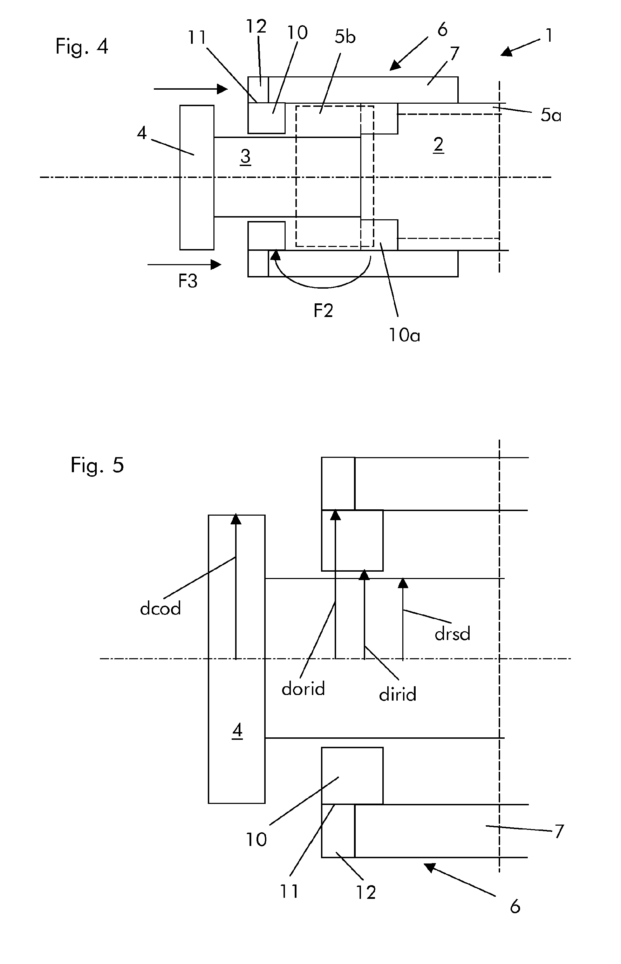

With reference to figures 4 and 5, the rotor assembly 1 is described first. In particular in these figures elements equal or similar to those already described with reference to figures 1-3 have the same reference numbers.

The rotor assembly 1 comprises a rotor that includes the rotor core 2, the rotor shafts 3 and one or two couplings 4.

In particular the rotor core 2 is provided with a rotor shaft 3 at each of its axial ends (in the attached figures only one end is shown) and one or also both rotor shafts 3 can be provided with a coupling 4. The coupling 4 is needed to connect the rotor shaft 3 to a motor such as a gas or steam turbine or to any rotating auxiliary components such as an exciter shaft, slip ring shaft or flywheel.

For example, when the rotor core 2 is only connected to one motor (for example one gas turbine or one steam turbine) only one end thereof is provided with the coupling 4, and when the rotor core 2 is connected to two motors (typically a gas turbine at one side and a steam turbine at the other side of the rotor core 2) both rotor shafts 3 are provided with the coupling 4.

In the following only one portion of the rotor 1 is shown and thus only one coupling at one rotor shaft 3 is shown; it is clear that according to the particular configuration the other rotor shaft (not shown) can be provided with a coupling or not, and the coupling and retaining system can be equal or have similar features as the coupling and a retaining system shown or can also be different or of traditional type.

The rotor core 2 has slots that house a part 5a of the windings, another part of the windings (end windings 5b) is housed outside of the slots.

The rotor core 2 is provided with a retaining system 6 having a retaining ring 7 connected above the rotor core 2 with a portion thereof extending above the rotor shaft 3.

In addition, the retaining system 6 includes an inner ring 10 cut from the rotor.

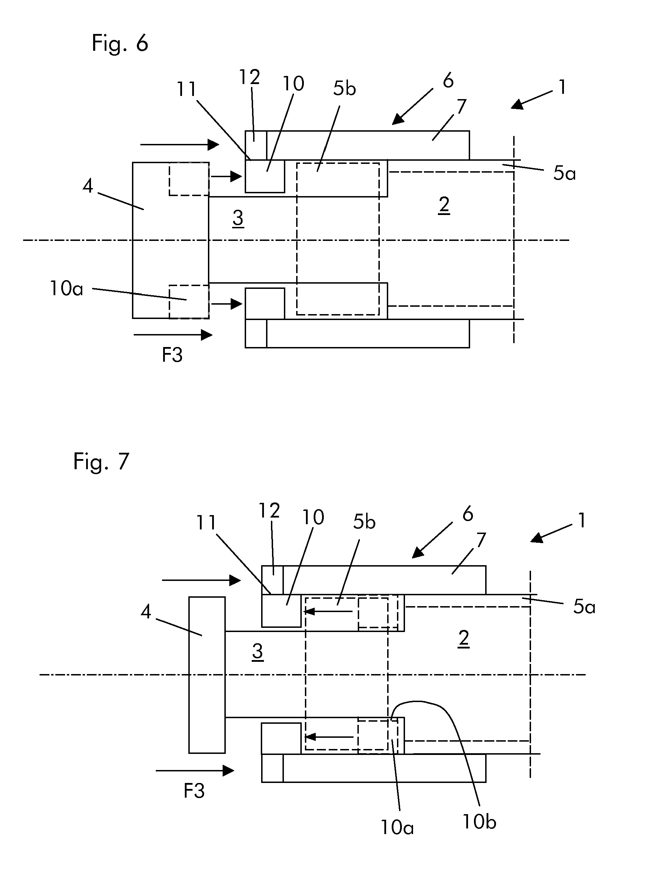

For example, the inner ring 10 can be cut from the rotor core 2 (reference 10a indicates the original position of the inner ring when still integral with the rotor core 2 and arrow F2 indicates the different position thereof). Alternatively, the inner ring 10 can be cut from the coupling 4 (figure 6) or any location on the shaft 3 (figure 7, in this case the portion 10b can be removed to obtain an inner ring 10 of the required inner diameter).

As shown, the inner ring 10 is connected within a free end of the retaining ring 7 (i.e. it is connected to the end of the retaining ring 7 opposite the end that is connected above the rotor core 2).

In addition, a portion 11 of the inner ring 10 projects from the retaining ring 7, and an outer ring 12 is connected above the projecting portion 11 of the inner ring 10.

Advantageously the outer ring 12 has an inner diameter dorid that is larger than an outer radial dimension of the coupling 4; the outer radial dimension typically is the outer diameter dcod of the coupling 4, it is clear that this dimension can also be a different dimension in case the coupling 4 is not circular. This feature is nevertheless not mandatory.

The inner ring 10 has an inner diameter dirid that is smaller than an outer radial dimension dcod of the coupling 4 and that is larger than a rotor shaft diameter drsd.

This particular structure allows the stiffness of the retaining ring to be increased and, therefore, the deformation during operation to be sensibly reduced (in particular the deformation due to the end windings 5b urging against the retaining ring 7).

In fact, the thickness that counteracts the deformations is the whole radial thickness of the inner ring 10 and outer ring 12 (i.e. the sum thereof), whereas in traditional devices (figures 1-3) only the thickness of the retaining ring cover 8 could counteract the deformations of the retaining ring 7.

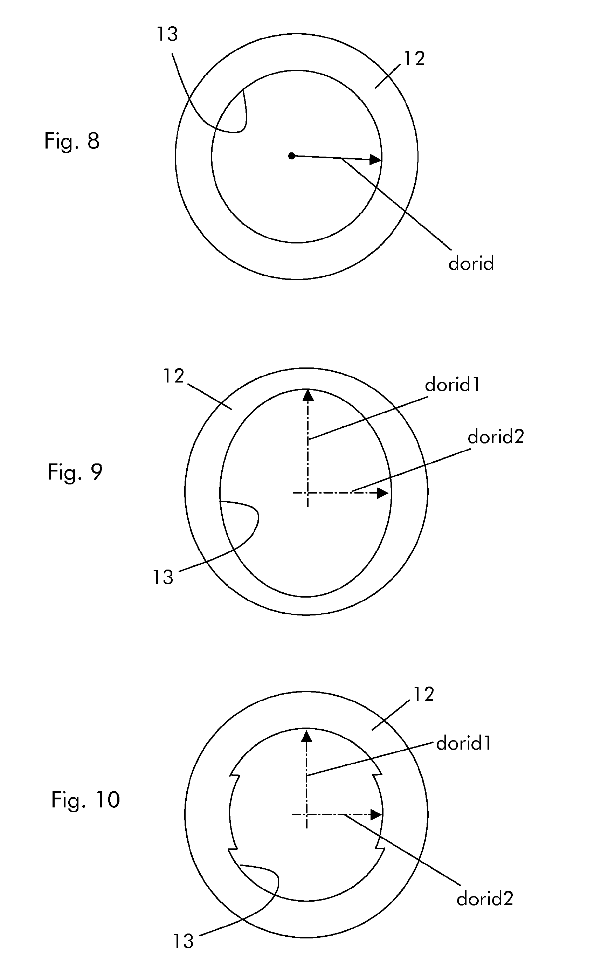

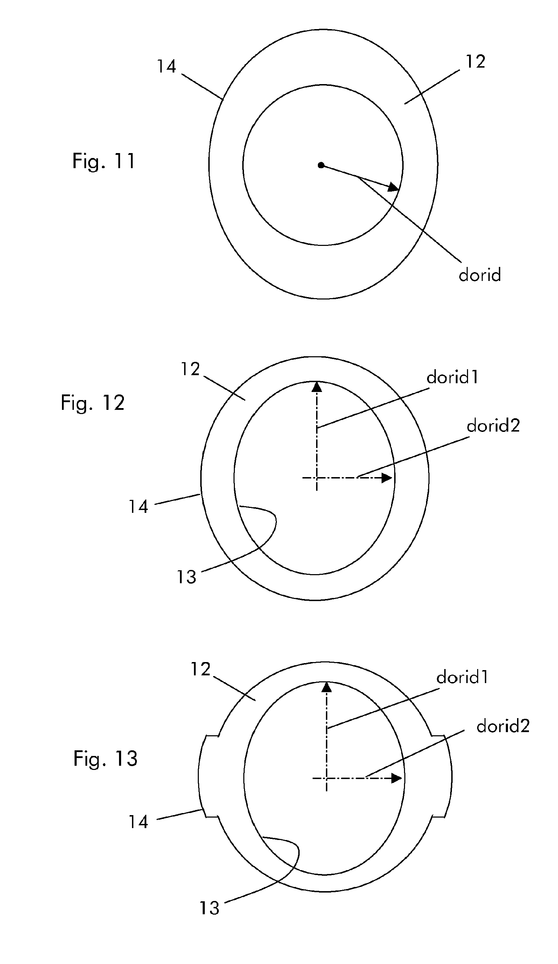

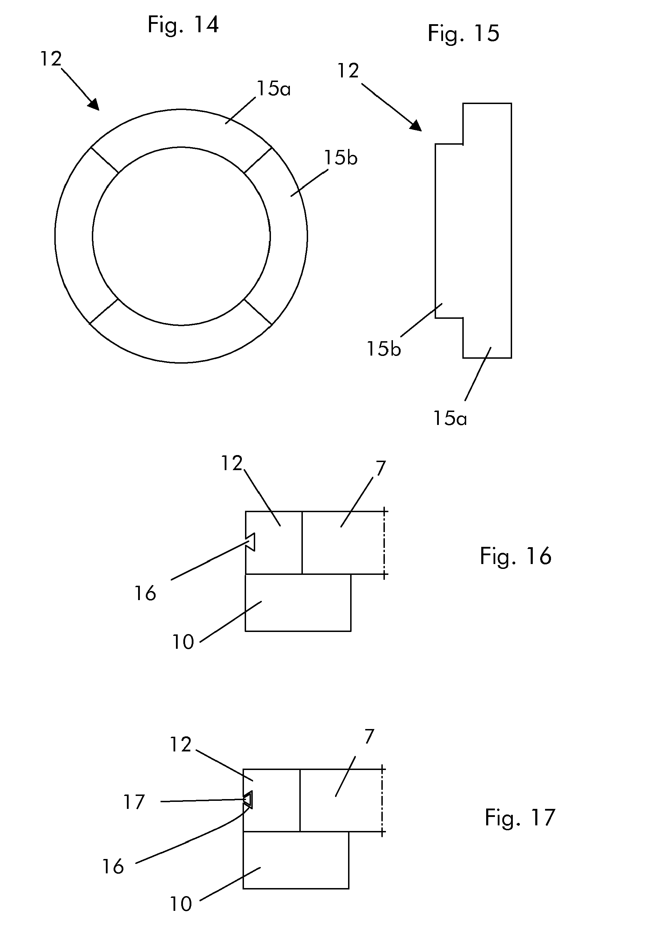

In different embodiments, the outer ring 12 can have:
- an inner surface 13 (i.e. the surface that is in contact with the portion 11 of the inner ring 10) with a circular shape (having the diameter dorid, figure 8),
- an inner surface 13 with sectors having different inner diameter, to vary the shrink fit towards the inner ring 10. For example two different diameters can be provided dodid1 and dorid2 with a continuous and/or stepped transition between them; this embodiment can also implement an elliptic inner surface (figures 9, 10, in the figures the diameter differences are exaggerated for clarity),
- an outer surface 14 with sectors having different diameter with a continuous and/or stepped transition between them, to vary the shrink fit towards the inner ring (figure 11),
- an inner surface 13 and an outer surface 14 with sectors having different diameter with a continuous and/or stepped transition between them, to vary the shrink fit towards the inner ring 10 (figures 12, 13, the diameter differences are exaggerated for clarity),
- sectors 15a, 15b having different axial length with a continuous or stepped transition between them, to vary the shrink fit towards the inner ring 10 (figures 14, 15).

In addition the outer ring 12 can be made out of a material different from the inner ring 10. For example the outer ring 12 can be made out of a material with magnetic properties to optimise for electric field losses such as stainless steal, or a material with different density to optimise for mechanical strength and expansion under centrifugal load such as carbon fibres.

The outer ring can also include balancing elements for the shrunk-on assembly of the retaining ring 7, inner ring 10 and outer ring 12. The balancing elements can include a groove 16 to insert a balancing weight 17. This allows for an additional balancing plane (figures 16, 17).

The method for applying a retaining system 6 above a rotor core 2 of an electric machine comprises:
- providing a rotor including a rotor core 2 with at least a rotor shaft 3 having at least a coupling 4,
- cutting an inner ring 10 from the rotor,
- connecting a retaining ring 7 above the rotor core 2 with a portion thereof extending above the rotor shaft 3,
- connecting the inner ring 10 within a free end of the retaining ring 7,
- leaving a portion 11 of the inner ring 10 projecting from the retaining ring 7,
- inserting an outer ring 12 above the coupling 4 and shaft 3 (arrow F3),
- connecting the outer ring 12 above the projecting portion 11 of the inner ring 10.

In particular, the inner ring 10 is connected to the retaining ring 7 by shrinking and the outer ring 12 is connected to the inner ring 10 by shrinking.

Moreover, according to the method the inner ring 10 can be cut from the rotor core 2, and/or from the coupling 4 and/or from the shaft 3.

Advantageously an outer ring 12 is provided that has an inner diameter dorid larger than an outer radial dimension dcod of the coupling 4. This feature helps insertion of the outer ring 12 above the coupling 4. Alternatively (if for example the coupling is not circular) the inner diameter dorid could also be smaller than the outer radial dimension dcod of the coupling 4, but the outer ring 12 could be so bended during insertion above the coupling 4 as to allow insertion anyway.

Naturally the features described may be independently provided from one another.

In practice the materials used and the dimensions can be chosen at will according to requirements and to the state of the art.

### REFERENCE NUMBERS

- 1: rotor
- 2: rotor core
- 3: rotor shaft
- 4: coupling
- 5a: part of windings housed in slots of 2
- 5b: part of windings housed outside of the slots of 2
- 6: retaining system
- 7: retaining ring
- 8: retaining system cover (prior art)
- 10: inner ring
- 10a: original position of the 10 when connected to the 2
- 10b: portion to be removed
- 11: portion of 10 projecting from 7
- 12: outer ring
- 13: inner surface
- 14: outer surface
- 15a: sector
- 15b: sector
- 16: groove
- 17: balancing weight drrcid retaining ring cover inner diameter dorid, dorid1, dorid2 outer ring inner diameter dcod coupling outer diameter dirid inner ring inner diameter drsd rotor shaft diameter
- F: insertion of the 8 above 4
- F1: cut of 8 from 2
- F2: cut of 10 from 2
- F3: insertion of 12 above 4

## Claims

1. Method for applying a retaining system (6) above a rotor core (2) of an electric machine, the method comprising:
- providing a rotor including a rotor core (2) with at least a rotor shaft (3) having at least a coupling (4),
- cutting an inner ring (10) from the rotor,
- connecting a retaining ring (7) above the rotor core (2) with a portion thereof extending above the rotor shaft (3),
- connecting the inner ring (10) within a free end of the retaining ring (7),
**characterised by**:
- leaving a portion (11) of the inner ring (10) projecting from the retaining ring (7),
- inserting (F3) an outer ring (12) above the coupling (4) and rotor shaft (3),
- connecting the outer ring (12) above the projecting portion (11) of the inner ring (10).

2. Method according to claim 1, **characterised in that** the inner ring (10) is connected to the retaining ring (7) by shrinking.

3. Method according to claim 1, **characterised in that** the outer ring (12) is connected to the inner ring (10) by shrinking.

4. Method according to claim 1, **characterised by** cutting the inner ring (10) from the rotor core (2).

5. Method according to claim 1, **characterised by** cutting the inner ring (10) from the coupling (4).

6. Method according to claim 1, **characterised by** cutting the inner ring (10) from the shaft (3).

7. Method according to claim 1, **characterised by** providing an outer ring (12) whose inner diameter (dorid) is larger than an outer radial dimension of the coupling (docd).

8. Rotor assembly (1) of an electric machine comprising
- a rotor including a rotor core (2) with at least a rotor shaft (3) having at least a coupling (4),
- an inner ring (10) cut from the rotor,
- a retaining ring (7) connected above the rotor core (2) with a portion thereof extending above the rotor shaft (3),
- the inner ring (10) being connected within a free end of the retaining ring (7),
**characterised in that**:
- a portion of the inner ring (10) projects from the retaining ring (7),
- an outer ring (12) is provided,
- the outer ring (12) is connected above the projecting portion (11) of the inner ring (10).

9. Rotor (1) according to claim 8, **characterised in that** the inner ring (10) has an inner diameter (didir) smaller than an outer radial dimension of the coupling (dcod).

10. Rotor (1) according to claim 8, **characterised in that** the inner ring (10) has an inner diameter (dirid) larger than a rotor shaft diameter (drsd).

11. Rotor (1) according to claim 8, **characterised in that** the outer ring (12) has inner diameter (dorid) that is larger than an outer radial dimension of the coupling (dcod).

12. Rotor (1) according to claim 8, **characterised in that** the outer ring (12) has an inner surface (13) and/or an outer surface (14) with sectors having different diameter and/or the outer ring (12) has sectors (15a, 15b) having different axial length.

13. Rotor (1) according to claim 8, **characterised in that** the outer ring (12) is made out of a material different from the inner ring (10).

14. Rotor (1) according to claim 8, **characterised in that** the outer ring (12) includes at least a balancing element for the retaining ring (7), inner ring (10) and outer ring (12).

15. Rotor (1) according to claim 14, **characterised in that** the at least a balancing element includes a groove (16) containing at least a balancing weight (17).
